## Europäisches Patentamt
## European Patent Office
## Office européen des brevets

(19)

(11) Numéro de publication: **0 383 916**

**A1**

(12)

# DEMANDE DE BREVET EUROPEEN PUBLI E EN APPLICATION DE L'article 158, paragraphe 3 de la CBE

(21) Numéro de dépôt: 88909005.6

(22) Date de dépôt: 19.08.88

(86) Numéro de dépôt internationale : PCT/SU88/00159

(87) Numéro de publication internationale : WO 90/02434 (08.03.90 90/06)

(51) Int. Cl.5: **H02K 1/24, H02K 21/08**

(43) Date de publication de la demande:
29.08.90 Bulletin 90/35

(84) Etats contractants désignés:
**DE FR IT SE**

(71) Demandeur: **NAUCHNO-PROIZVODSTVENNOE OBIEDINENIE "MAGNETON"**
**ul. Kuibysheva, 26**
**Vladimir, 600029(SU)**

Demandeur: **SIMFEROPOLSKY GOSUDARSTVENNY UNIVERSITET IMENI M.V.FRUNZE**
**ul. Yaltinskaya, 4**
**Simferopol, 333036(SU)**

(72) Inventeur: **STADNIK, Ivan Petrovich**
**ul. Kievskaya, 134a-18**
**Simferopol, 333043(SU)**
Inventeur: **GRIDNEV, Alexandr Ivanovich**
**ul. Gorkogo, 85b-31**
**Vladimir, 600005(SU)**
Inventeur: **KLEVETS, Nikolai Ivanovich**
**ul. Z.Kosmodemyanskoi, 16**
**Simferopol, 333023(SU)**
Inventeur: **KELIN, Nikolai Alexandrovich**
**ul. Frunze, 34-54**
**Vladimir, 600020(SU)**
Inventeur: **SITNIKOV, Anatoly Fedorovich**
**ul. Rastopchina, 59b-37**
**Vladimir, 600032(SU)**

(74) Mandataire: **Beauchamps, Georges et al**
**Cabinet Z.Weinstein 20, avenue de Friedland**
**F-75008 Paris(FR)**

(54) **ROTOR MULTIPOLAIRE DE MACHINE ELECTRIQUE.**

(57) Rotor multipolaire de machine électrique, ayant sensiblement la forme d'un cylindre circulaire, et

Xerox Copy Centre

comprenant un nombre pair au moins égal à quatre, d'aimants polaires (1), disposés régulièrement en cercle, et comprenant également des aimants interpolaires (2) adjacents, les pôles des aimants polaires (1) et les surfaces latérales des aimants interpolaires (2) formant ensemble la surface cylindrique du rotor, et les aimants polaires (1) étant aimantés parallèlement à leurs plans de symétrie (5), tandis que les aimants interpolaires sont aimantés perpendiculairement aux plans de symétrie (6) de ces aimants (2).

FIG.1

- 1 -

"Rotor multipolaire pour machine électrique"

Domaine de l'invention

La présente invention se rapporte aux machines électriques et, plus précisément, concerne un rotor multipolaire pour machine électrique.

Etat de la technique

Dans la fabrication des machines électriques à aimants permanents, le problème très important qui se pose est d'améliorer les caractéristiques électromécaniques spécifiques des machines (telles que puissance, couple moteur, force électromotrice et autres) et par unité de masse de la machine.

Les solutions possibles pour résoudre ce problème sont l'augmentation du flux magnétique d'excitation (désigné ci-après flux magnétique) créé par le rotor multipolaire de la machine électrique grâce à la réalisation d'aimants, dont est constitué le rotor, en matériaux magnétiquement durs et anisotropes, qui présentent des caractéristiques magnétiques améliorées, les solutions permettent une encore meilleure utilisation du volume du rotor par les aimants qui le composent, ainsi qu'une orientation optimale de leur aimantation.

On connaît un rotor multipolaire pour machine électrique de forme cylindrique (SU, A, 647797) comprenant des aimants permanents de forme prismatique, disposés régulièrement en cercle, aimantés le long de leurs plans de symétrie et dotés chacun d'une pièce polaire en matériau magnétiquement doux. Pour un meilleur remplissage du volume du rotor par le matériau magnétiquement dur (présentant un hystérésis notable),

- 2 -

les aimants prismatiques ont des faces latérales obliques par lesquelles les aimants adjacents se joignent.

Les aimants permanents sont fixés sur une douille en matériau magnétiquement doux, et des pièces en matériau amagnétique sont insérées entre ces aimants.

L'exécution de la structure du rotor décrite plus haut ne permet pas de remplir complètement le volume du rotor avec le matériau magnétiquement dur qui, à cause des pièces polaires, est écarté de la surface cylindrique du rotor, ce qui empêche l'augmentation sensible du flux magnétique. La présence des pièces polaires réduit le flux magnétique, à cause des flux de dissipation entre les pièces polaires adjacentes, et augmente les pertes par courants tourbillonnaires ainsi que par réaimantation, et entraîne de plus un accroissement de l'inductance de la machine électrique.

Les sources du flux magnétique d'excitation émis par un tel aimant sont tout d'abord les charges magnétiques réparties sur les pôles dont la section forme un arc dont la longueur est sensiblement inférieure au pas polaire du rotor, et sont également les charges magnétiques réparties sur la surface de la douille en matériau magnétiquement doux, et qui créent un flux magnétique d'orientation inverse par rapport à celui des charges réparties sur les pôles. L'arc polaire raccourci et l'orientation inverse du flux magnétique dans la douille en matériau magnétiquement doux sont deux facteurs qui réduisent le flux magnétique émis par les pôles. En outre, la largeur du pôle suivant un arc réduit entraîne une chute rapide de l'induction dans l'entrefer hors dudit arc polaire, ce qui réduit le couple moteur développé par le moteur électrique.

- 3 -

On connaît un rotor à aimants permanents de forme cylindrique pour machines électriques (GB, A, 2075274) comprenant des sections polaires en matériau magnétiquement doux, disposées régulièrement en cercle, et des sections interpolaires en matériau magnétiquement dur et aimantées perpendiculairement aux plans de symétrie correspondants des sections polaires adjacentes.

La concentration du flux magnétique dans l'entrefer entre le rotor décrit et le stator de la machine électrique est atteinte grâce à la présence dans le rotor de sections en matériau magnétiquement doux.

Le rotor de machine électrique décrit qui présente un nombre déterminé de pôles et des entrefers réduits permet d'augmenter le flux magnétique, mais la présence de sections en matériau magnétiquement doux provoque une augmentation des flux de dissipation avec l'accroissement du nombre de pôles et de l'entrefer. Par conséquent, l'inductance de la machine électrique dotée d'un tel rotor croît aussi, ce qui entrave la commande de l'entraînement électrique.

On connaît un rotor multipolaire pour machine électrique sensiblement cylindrique (US, A, 3334254) et du type comprenant un nombre pair, égal au moins à quatre, d'aimants polaires disposés régulièrement en cercle, ces aimants étant disposés en alternance avec certains de leurs pôles dirigés vers le centre du cercle, et d'autres pôles orientés vers sa périphérie, le rotor comportant également des aimants interpolaires adjacents aux aimants polaires et orientés vers la périphérie du cercle par leurs surfaces latérales.

Les aimants polaires sont dotés de pièces polaires en

- 4 -

matériau magnétiquement doux qui, conjointement aux aimants interpolaires, forment la surface cylindrique du rotor. Les aimants polaires sont fixés sur une douille en matériau magnétiquement doux et sont aimantés suivant une direction radiale, tandis que les aimants interpolaires sont espacés par rapport à la douille et sont aimantés suivant des arcs de la circonférence. Dans le rotor décrit, la présence des pièces polaires orientant les lignes de force du champ magnétique perpendiculairement à la surface de travail du rotor, ne permet pas l'orientation directe des aimants polaires vers la surface latérale du rotor et ne permet pas en outre l'élimination complète des flux de dissipation, ce qui mène à une réduction du flux magnétique. De plus, les pertes par courants tourbillonnaires et par réaimantation sont augmentées et provoquent donc l'accroissement de l'inductance de la machine électrique.

Avec cela, l'orientation radiale de l'aimantation des aimants polaires et la direction en arcs de l'aimantation des aimants interpolaires sont techniquement difficiles à réaliser, et même si l'on parvient à cette orientation de l'aimantation, les caractéristiques magnétiques des matériaux magnétiquement durs baissent. Lors de l'aimantation radiale de l'intérieur des aimants polaires, des charges magnétiques surviennent et réduisent le flux magnétique d'excitation.

La présence de la douille en matériau magnétiquement doux ne permet pas d'utiliser entièrement le volume du rotor pour placer les aimants, réduit la longévité de la magnétisation du rotor, et conduit à l'apparition de pertes par courants tourbillonnaires et par réaimantation et de plus augmente l'inductance de la

- 5 -

machine électrique.

Exposé de l'invention

L'invention a pour but de fournir un rotor multipolaire pour machine électrique ayant une disposition de ses aimants polaires et interpolaires et une orientation de leur aimantation qui permet d'augmenter le flux magnétique du rotor.

Le problème posé est résolu en proposant un rotor de machine électrique, ayant essentiellement une forme de cylindre circulaire, et comprenant un nombre pair, au moins égal à quatre, d'aimants polaires disposés régulièrement en cercle et dont les pôles sont orientés alternativement les uns vers le centre du cercle et les autres vers sa périphérie, ainsi que des aimants interpolaires adjacents aux aimants polaires dont les surfaces latérales sont orientées vers la périphérie du cercle, caractérisé en ce que certains des pôles des aimants polaires et notamment ceux orientés vers la périphérie du cercle, formant conjointement avec la surface latérale des aimants interpolaires, directement la surface cylindrique du rotor, les aimants polaires étant aimantés parallèlement à leurs plans de symétrie, tandis que les aimants interpolaires sont aimantés perpendiculairement à leurs propres plans de symétrie.

Pour former rationnellement la surface cylindrique du rotor, chaque aimant polaire doit constituer en section transversale du rotor une partie de cercle, délimitée par un arc, dont la longueur est sensiblement égale au produit du rapport de la largeur circonférentielle des pôles au pas polaire par le pas polaire du rotor, et par des tronçons de cordes dont l'intersection se trouve en un point situé sur le plan de symétrie de l'aimant

- 6 -

polaire correspondant, et que chaque aimant interpolaire représente en soi une figure géométrique ayant certains de ses côtés opposés qui coïncident avec les tronçons des cordes délimitant les aimants polaires adjacents, et d'autres côtés opposés, qui sont symétriques par rapport au plan de symétrie de l'aimant interpolaire.

Il est avantageux que l'angle entre les tronçons des cordes délimitant l'aimant polaire soit défini par la relation :

$$\beta = \alpha \left( \frac{p}{3} + \frac{3}{4} \right) ,$$

où p est le nombre de paires de pôles du rotor,
$\alpha$ est l'arc délimitant l'aimant polaire.

Il est aussi avantageux que l'angle entre les tronçons de corde délimitant l'aimant polaire soit égal à $\pi$

Il est préférable que, pour former la surface cylindrique du rotor, chaque aimant polaire, en section transversale du rotor représente en soi une partie de cercle délimitée par un arc, dont la longueur est égale au pas polaire du rotor, ainsi que par des tronçons de cordes partant des extrémités de cet arc et s'appuyant sur un arc $\left( \frac{\pi}{2} - \frac{\pi}{2p} \right)$, tandis que chaque aimant interpolaire a la forme d'un triangle isocèle dont les côtés latéraux coïncident avec les tronçons des cordes délimitant les aimants polaires adjacents et dont le sommet se trouve en un point situé entre les extrémités des arcs de ces aimants polaires.

Le rotor multipolaire de machine électrique proposé permet de créer un flux magnétique proche du maximum

- 7 -

possible pour le matériau magnétiquement dur utilisé et pour le volume donné du rotor.

Dans le rotor proposé, on peut utiliser des aimants en matériaux magnétiquement durs et anisotropes ayant une texture cristalline et magnétique rectiligne et possédant de hautes qualités magnétiques. En outre, le rotor proposé possède une forte longévité avant désaimantation puisqu'il est exempt de pièces en matériaux magnétiquement doux.

L'utilisation des rotors proposés dans des machines électriques réduit notablement les pertes par courants tourbillonnaires et par réaimantation parce que les matériaux magnétiques durs et anisotropes employés possèdent une faible conductibilité.

La structure proposée permet de créer des rotors avec un grand nombre de pôles (plus de vingt), largement utilisés par exemple, dans les moteurs électriques pas à pas, sans réduction sensible du flux magnétique total (c'est-à-dire émis par tous les pôles).

Description sommaire des dessins

L'invention va maintenant être expliquée dans la description de modes de réalisation et en se référant aux dessins annexés dans lesquels :

la figure 1 représente en vue de face un rotor quadripolaire selon l'invention et placé dans un stator de machine électrique ;

la figure 2 représente en vue de face un rotor quadripolaire selon l'invention, avec des aimants interpolaires d'une forme différente ;

EP 0 383 916 A1

- 8 -

la figure 3 est une vue similaire à la figure 2 mais qui représente un rotor suivant l'invention avec des aimants polaires et interpolaires ayant encore une autre forme ;

la figure 4 représente en vue de face un rotor hexapolaire suivant l'invention avec des aimants polaires et interpolaires ayant encore une autre forme ; et

la figure 5 représente les diagrammes de flux magnétique (en unités relatives) émis par les pôles du rotor représenté sur la figure 1, et en fonction du rapport de l'épaisseur des aimants polaires au rayon du rotor pour différents nombres de pôles.

Le meilleure mode de réalisation de l'invention

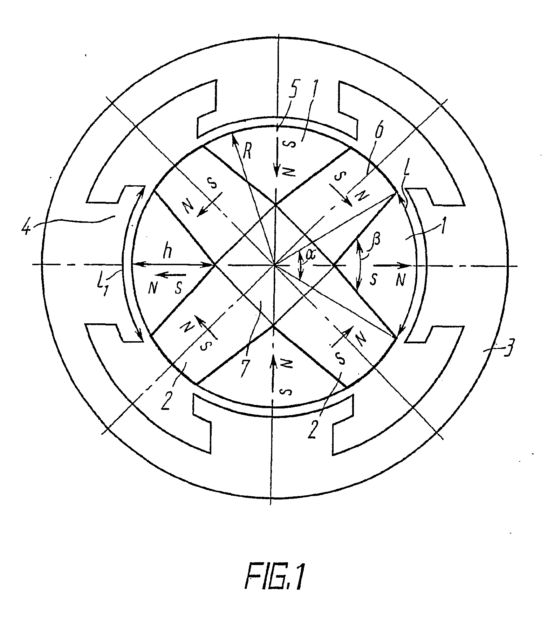

Le rotor de machine électrique, ayant essentiellement la forme d'un cylindre circulaire, et comprenant un nombre au moins égal à quatre d'aimants polaires 1 (figure 1), disposés régulièrement suivant un cercle de rayon R (dans la version décrite, quatre aimants polaires 1, ce qui correspond à un rotor quadripolaire) et dont les pôles sont orientés alternativement les uns vers le centre du cercle et les autres orientés vers sa périphérie. Des aimants interpolaires 2 adhèrent aux aimants polaires et sont disposés de manière que leurs pôles semblables se joignent aux surfaces latérales de l'aimant polaire 1 situé entre eux, et coïncident avec le pôle de cet aimant polaire 1 orienté vers la périphérie du cercle.

Les aimants polaires et interpolaires 1, 2 sont fabriqués dans le même matériau magnétique dur ou dans un matériau différent et il est préférable de les fabriquer en matériaux magnétiques durs et anisotropes à texture cristalline et magnétique rectiligne, puisque ces matériaux possèdent de meilleures caractéristiques magnétiques.

Les aimants polaires 1 sont disposés de manière que leurs pôles orientés vers la périphérie du cercle, conjointement avec la surface latérale des aimants interpolaires 2, forment directement la surface cylindrique du rotor.

Dans la section transversale du rotor (sur cette figure et sur les figures suivantes, pour la commodité de représentation, on a représenté la vue de face avant du rotor), chaque aimant polaire 1 constitue une partie d'un cercle de rayon R, délimitée par un arc $\alpha$ dont la longueur 1 est déterminée par la structure du stator 3 de la machine électrique, et en général est sensiblement égale au produit du rapport de la largeur circonférentielle du pôle de stator au pas polaire par le pas polaire du rotor.

Dans le mode de réalisation décrit, la figure 1 représente schématiquement un stator 3 de moteur électrique sans son bobinage et avec un faible entrefer, pour lequel le rapport de la largeur circonférentielle de pôle au pas polaire est déterminé comme le rapport de la longueur $l_1$ de l'arc du pôle 4 du stator 3 au pas polaire $\tau$. Dans ce cas, la longueur de l'arc $\alpha$ de l'aimant polaire 1 est pratiquement égale à la longueur $l_1$ de l'arc du pôle 4 du stator 3.

L'aimant polaire est aussi délimité par deux tronçons des cordes passant par les extrémités différentes de l'arc $\alpha$ et dont l'intersection se trouve en un point situé dans le plan de symétrie 5 de l'aimant polaire 1.

- 10 -

L'angle $\beta$ entre les tronçons des cordes délimitant chaque aimant polaire 1 est choisi de façon que le flux magnétique $\overline{\Phi}$ émis par un pôle soit proche du flux magnétique maximal $\overline{\Phi}_{max}$ (la différence par rapport au maximum ne doit pas être supérieure à 5 %) pour une consommation minimum de matériau magnétiquement dur.

En outre, l'angle $\beta$ dépend de la structure de la machine électrique utilisant le rotor, et notamment du nombre de pôles, de la taille de l'entrefer entre le rotor et le stator, de la largeur des pôles du rotor et du rapport des aimantations des aimants polaires 1 et interpolaires 2. La formule qui répond aux conditions précitées, pour le cas d'un vecteur d'aimantation identique pour tous les aimants 1, 2 et d'un entrefer faible entre le rotor et le stator (ne dépassant pas 0,05 R), est la suivante :

$$\beta = \alpha \left( \frac{p}{3} + \frac{3}{4} \right)$$

où p est le nombre de paires de pôles du rotor, égal au nombre de paires d'aimants polaires 1.

Pour la version décrite, quand p = 2 et $\alpha = 0,5 \frac{\widetilde{\pi}}{p}$ l'angle $\beta$ vaut 0,354 $\widetilde{\pi}$ (en radians).

Chaque aimant interpolaire 2 représente, en section transversale du rotor, une figure géométrique ayant certains de ses côtés opposés qui coïncident avec les tronçons des cordes délimitant les aimants polaires 1 adjacents, et d'autres côtés opposés, symétriques par rapport au plan de symétrie 6 de l'aimant interpolaire 2. Dans le mode de réalisation en question, l'un des côtés de l'aimant interpolaire 2 qui est orienté vers le centre du cercle, forme un tronçon de droite reliant les

- 11 -

sommets des aimants polaires 1 adjacents, tandis que le côté opposé au précédent représente en soi un arc $\left(\frac{\pi}{p} - \alpha\right)$ du cercle au rayon R. Avec une telle exécution des aimants interpolaires 2, un canal 7 se forme dans la partie centrale du rotor, il présente une section carrée où des douilles et un arbre en matériau amagnétique peuvent être placés.

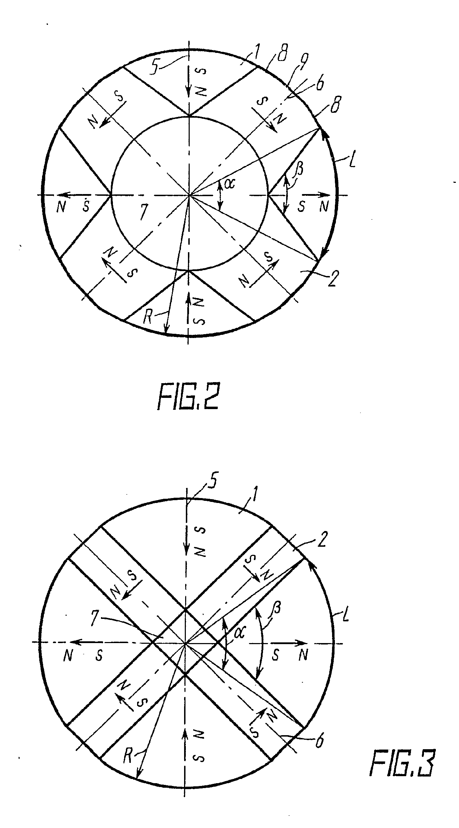

Suivant un autre mode de réalisation du rotor représenté sur la figure 2, les aimants polaires 1 sont exécutés de manière analogue à celle décrite plus haut, tandis que chaque aimant interpolaire 2 a un côté orienté vers le centre du cercle qui constitue un arc de cercle de rayon r égal à $\frac{\pi}{p}$ , et possède un autre côté opposé au premier qui forme une ligne brisée, composée de deux tronçons d'arc 8 $\left(\frac{\pi}{p} - \alpha\right)$ et d'une corde 9 située entre ceux-ci, perpendiculaire au plan de symétrie 6 de l'aimant interpolaire 2. Dans ces conditions, il se forme dans la partie centrale du rotor un canal 7 de section circulaire, ce qui est plus avantageux du point de vue de la simplification de l'exécution technologique de la douille et de l'arbre qui doivent être placées dans le rotor.

Dans le mode de réalisation du rotor représenté sur la figure 3, les aimants polaires 1 constituent aussi une partie de cercle de rayon R et ayant une longueur l de l'arc $\alpha$ déterminée comme décrit plus haut, l'angle $\beta$ entre les tronçons des cordes et qui délimite les aimants polaires 1 étant déterminé suivant la formule $\beta = \frac{\pi}{p}$ . Quand cette relation est satisfaisante, les tronçons des cordes délimitant les aimants polaires adjacents 1, entre lesquels se trouve l'aimant interpolaire 2 sont parallèles entre eux. Il est dans ce cas rationnel du point de vue technologique, de fabriquer les aimants interpolaires 2 avec une section

- 12 -

transversale rectangulaire.

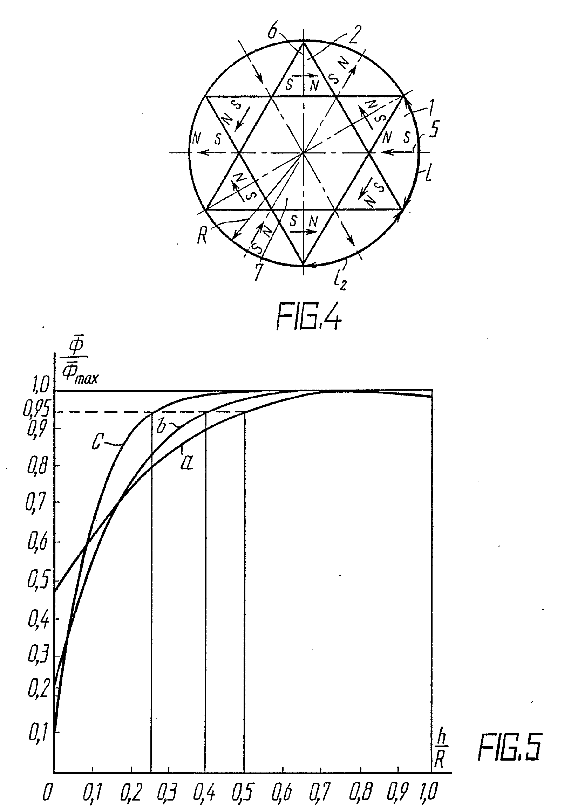

Dans encore un autre mode de réalisation du rotor multipolaire représenté sur la figure 4, on a un rotor hexapolaire dans lequel chaque aimant polaire 1 est une partie d'un cercle, délimitée par un arc $\alpha$ dont la longueur 1 est égale au pas polaire $\tau$ ainsi que par des tronçons de cordes partant des extrémités de l'arc $\alpha$ et s'appuyant sur un arc dont la longueur $l_2$ est égale à $\left(\dfrac{\tau}{2} - \dfrac{\tau}{2p}\right)$. Chaque aimant interpolaire 2 a la forme d'un triangle isocèle dont les côtés latéraux coïncident avec les tronçons des cordes délimitant des aimants polaires adjacents 1 et dont le sommet se trouve à un point situé entre les extrémités des arcs de ces aimants polaires 1.

Une telle composition des aimants polaires 1 et interpolaires 2, permet d'avoir une économie de matériau magnétiquement dur qui croît avec l'augmentation du nombre de pôles, et qui d'ailleurs est également obtenue avec les modes de réalisation du rotor décrits plus haut.

Pour mieux comprendre l'esprit et les avantages de l'invention, on présente sur la figure 5 des diagrammes, représentant le flux magnétique $\phi$ à son maximum possible $\phi_{max}$ en ordonnée et pour le rotor multipolaire représenté sur la figure 1, en fonction du rapport de l'épaisseur h de l'aimant polaire 1 mesurée le long de son plan de symétrie 5 au rayon R du rotor, et pour différents nombres de pôles (courbe a pour p=2 ; courbe b pour p=4 ; courbe c pour p=8).

Le rotor multipolaire de machine électrique proposé est fabriqué comme suit.

- 13 -

On découpe dans un matériau magnétiquement dur, les aimants polaires 1 et interpolaires 2 (figure 1 à 4), suivant la forme décrite ci-dessus et avec des dimensions requises, déterminées par les dimensions du stator dans lequel doit être monté le rotor.

Si l'on utilise un matériau magnétiquement dur et anisotrope à texture magnétique et cristalline rectiligne pour les aimants polaires 1 et interpolaires 2, il est nécessaire de découper les aimants 1, 2 de manière que les plans de symétrie 5 des aimants polaires 1 soient parallèles aux axes d'aimantation facile du matériau, et que les plans de symétrie 6 des aimants interpolaires 2 soient perpendiculaires aux axes d'aimantation facile de ces derniers.

Les aimants 1, 2 découpés peuvent être ensuite aimantés dans un inducteur bipolaire avec l'orientation prédéterminée, c'est-à-dire, les aimants polaires 1, parallèlement à leurs plans de symétrie 5 et les aimants interpolaires 2, perpendiculairement aux plans de symétrie 6 de ces aimants 2.

Ensuite, les aimants 1, 2 sont assemblés en tenant compte du fait que les aimants polaires 1 et interpolaires 2 doivent s'alterner. Pour fixer les aimants 1, 2, on peut utiliser une colle et/ou une enveloppe en matériau amagnétique (non représentée sur le dessin). Les aimants 1, 2 qui ont un volume important peuvent être assemblés en pièces de volume moindre en observant les prescriptions précitées et concernant l'orientation de leurs axes d'aimantation facile. Lors de l'assemblage, les aimants interpolaires 2 peuvent être fixés directement sur la douille ou sur l'arbre du rotor qui présente la forme respective de la section transversale.

- 14 -

Dans le cas où on utilise des aimants céramiques, les aimants interpolaires 2 peuvent être fabriqués par la technique de mise en forme de matériaux pulvérulents.

L'aimantation du rotor assemblé peut être, dans d'autres cas, réalisée à l'aide d'un inducteur multipolaire dont le nombre de pôles correspond au nombre de pôles du rotor, et pour obtenir une distribution optimale du champ magnétique, on peut placer dans le canal axial 7 du rotor des conducteurs sous courant qui, après l'opération d'aimantation, seront éliminés.

La présence des aimants polaires 1 et interpolaires 2 ayant des formes décrites plus haut dans une même zone polaire limitée par les plans de symétrie 6, des aimants interpolaires adjacents 2, alors que l'orientation d'aimantation et la forme des aimants 1, 2 est différente, permet d'obtenir un flux magnétique d'excitation qui est créé aussi bien que les charges magnétiques, réparties sur la surface cylindrique du rotor, que par les charges magnétiques intérieures, apparaissant aux limites des aimants polaires 1 et interpolaires 2. Dans ces conditions, les charges magnétiques intérieures en combinaison avec les charges superficielles, créent un flux magnétique proche du maximum possible, c'est-à-dire, du flux magnétique du rotor dans le cas où tout le rotor est rempli de matériau magnétiquement dur et que son aimantation en chaque point est orientée de manière optimale.

La valeur du flux magnétique des charges intérieures dépend de la position du point d'intersection des interfaces des aimants polaires et interpolaires 1, 2 et du plan de symétrie 5 des aimants polaires 1, c'est-à-dire, est déterminée par la valeur de l'angle $\beta$

- 15 -

entre les tronçons des cordes délimitant les aimants polaires 1.

On admet comme valeur optimale de l'angle $\beta$ celle où $\overline{\phi}$ est égal à 0,95. Pour un tel choix de la valeur de l'angle $\beta$ , le flux magnétique $\overline{\phi}$ , créé par le rotor, sera proche du maximum $\overline{\phi}_{max}$ pour une consommation minimale du matériau magnétiquement dur. Les digrammes, représentés sur la figure 5, permettent de déterminer l'angle $\beta$ pour la valeur requise de l'arc $\alpha$ et du rapport $\underline{h}$. On remarque alors qu'avec l'augmentation du R nombre de pôles du rotor, le rapport optimal $\dfrac{\overline{\phi}}{\overline{\phi}_{max}}$ est atteint à une valeur moindre de l'épaisseur h de l'aimant polaire 1. Le flux magnétique $\overline{\phi}$ émis par pôle avec l'augmentation du nombre de pôles, l'interface des aimants polaires et interpolaires 1, 2 sur laquelle sont concentrées les charges magnétiques intérieures se rapprochent de la surface du rotor, puisque sa structure est optimale. Le flux magnétique total (émis par tous les aimants 2p), comme le montrent les calculs pour le rotor proposé, augmente d'abord avec l'accroissement du nombre de pôles (jusqu'à 2p = 16 à 20), puis diminue légèrement.

La valeur du flux magnétique du champ des charges intérieures dépend du nombre de pôles du rotor, par exemple pour un rotor quadripolaire, le flux magnétique du champ des charges intérieures avec un angle $\beta$ optimal déterminé d'après la formule (1), et avec $\alpha = 0,5\,\tau$, représente 26 % du flux magnétique des charges superficielles, c'est-à-dire que le rotor proposé permet de créer un flux magnétique de 26 % supérieur, par exemple à celui du rotor fabriqué avec le même matériau et conformément à SU, A, 647797.

- 16 -

La contribution du champ magnétique des charges intérieures croît avec l'augmentation du nombre de pôles. Ainsi, pour un rotor à 14 pôles, avec $\alpha = 0,5\,\tau$ et avec l'angle $\beta$ calculé selon la formule (1), le flux magnétique du champ des charges intérieures représente 53 % du flux magnétique du champ des charges superficielles, c'est-à-dire que le flux magnétique augmente de 53 %.

Le rotor représenté sur la figure 2 est technologiquement supérieur puisqu'on peut utiliser un arbre de section circulaire et réalisé en matériau amagnétique. Mais pour la forme décrite d'exécution des aimants interpolaires 2 se forment à leurs limites intérieures des charges magnétiques parce que dans ce cas on a une composante normale d'aimantation différente de zéro, ce qui réduit insensiblement le flux magnétique. Les règles déterminées pour la version du rotor multipolaire décrite plus haut et concernant la détermination de l'angle optimal $\beta$, ainsi que la valeur de contribution des charges intérieures au flux magnétique avec l'augmentation du nombre de pôles et autres règles, sont applicables au mode de réalisation en question.

Les aimants interpolaires 2 (figure 3) de forme rectangulaire sont les plus simples à fabriquer, or le flux magnétique $\overline{\Phi}$ du rotor constitué de tels aimants 2 sera inférieur à $\overline{\Phi}_{max}$ d'une valeur insignifiante.

Dans la version du rotor représentée sur la figure 4, chaque aimant 1 est délimité par l'arc de circonférence $\alpha$ dont la longueur est égale au pas polaire $\tau$ du rotor, et l'angle $\alpha$ entre les tronçons de cordes est choisi en partant d'une condition d'absence de charges magnétiques aux limites des aimants polaires 1 et interpolaires 2.

- 17 -

Dans ce cas le flux magnétique $\overline{\Phi}$ ne sera créé que par les charges superficielles et sera un peu inférieur à $\overline{\Phi}_{max}$, et par conséquent la partie intérieure du rotor ne sera pas remplie de matériau magnétiquement dur, ce qui permettra d'obtenir une réduction notable du poids du rotor.

Toutes les versions décrites plus haut du rotor multipolaire proposé sont caractérisées par l'absence dans celui-ci de pièces en matériau magnétiquement doux, et qui permet d'augmenter la stabilité du rotor par rapport à la désaimantation et en plus de réduire les pertes par courants tourbillonnaires et par réaimantation.

Pour illustrer les avantages de l'invention proposée, on présentera ci-après les caractéristiques comparatives de différents types de moteurs électriques (pour les aimants, on utilise un matériau magnétiquement dur ayant des propriétés analogues).

- 18 -

Tableau

| Type de moteur | Nombre de pôles | Masse du moteur, kg | Couple moteur, Nm | Couple moteur spécifique, Nm/kg |
|---|---|---|---|---|
| Moteur électrique utilisant un rotor selon l'invention | 8 | 11,2 | 13 | 1,15 |
| Moteur électrique IFTS AG de Siemens | 6 | 13,5 | 12 | 0,88 |
| Moteur électrique utilisant un rotor selon l'invention | 6 | 65 | 40 | 0,61 |
| Moteur électrique de la firme Bosch | 6 | 67 | 25 | 0,37 |

Comme le montre le tableau ci-dessus, les moteurs électriques utilisant le rotor proposé possèdent des caractéristiques spécifiques plus élevées, comparés aux meilleurs types de moteurs connus.

Ainsi, le rotor multipolaire proposé permet de créer un flux magnétique proche du maximum, ce qui améliore notamblement les caractéristiques électromécaniques spécifiques de la machine électrique où il est utilisé.

Applicabilité industrielle

La présente invention peut être utilisée dans les

- 19 -

branches industrielles de la fabrication
électrotechnique, aéronautique, de machines-outils et
autres, pour la fabrication de rotors à aimants
permanents pour machines électriques, d'embrayages
électromagnétiques, de réducteurs et de freins.

- 20 -

Revendications

1. Rotor multipolaire pour machine électrique ayant essentiellement la forme d'un cylindre circulaire et comprenant un nombre pair au moins égal à quatre, d'aimants polaires (1), disposés régulièrement en cercle et dont les pôles sont orientés alternativement les uns vers le centre du cercle et les autres vers la périphérie, ainsi que des aimants interpolaires (2) adjacents aux aiments polaires (1) dont les surfaces latérales sont orientées vers la périphérie du cercle, caractérisé en ce que certains des pôles des aimants polaires (1) et notamment ceux orientés vers la périphérie du cercle, forment conjointement avec la surface latérale des aimants interpolaires (2), directement la surface cylindrique du rotor, les aimants polaires (1) étant aimantés parallèlement à leurs plans de symétrie (5), et les aimants interpolaires (2) étant aimantés perpendiculairement à leurs plans de symétrie (6).

2. Rotor multipolaire selon la revendication 1, caractérisé en ce que, pour former la surface cylindrique du rotor, chaque aimant polaire (1), en section transversale du rotor, constitue une partie de cercle délimitée par un arc ( $\alpha$ ) dont la longueur (l) est sensiblement égale au produit du rapport de la largeur circonférentielle d'un pôle du stator au pas polaire par la valeur du pas polaire ( $\tau$ ) du rotor, et par les tronçons de cordes dont l'intersection se trouve en un point situé sur le plan de symétrie (5) de l'aimant polaire (1) correspondant, et chaque aimant interpolaire (2) représente en soi une figure géométrique ayant certains de ses côtés opposés qui coïncident avec les tronçons des cordes délimitant les aimants polaires (1) adjacents, et d'autres côtés

- 21 -

opposés qui sont symétriques par rapport au plan de symétrie (6) des aimants interpolaires (2).

3. Rotor multipolaire d'après la revendication 2 caractérisé en ce que l'angle ( $\beta$ ) entre les tronçons des cordes délimitant l'aimant polaire (1) est défini par la relation :

$$\beta = \alpha \left( \frac{p}{3} + \frac{3}{4} \right)$$

où p est le nombre de paires de pôles du rotor.

4. Rotor multipolaire selon la revendication 2 caractérisé en ce que l'angle ( $\beta$ ) entre les tronçons des cordes délimitant l'aimant polaire (1) est égal à $\frac{\pi}{2}$ .

5. Rotor multipolaire selon la revendication 1, caractérisé en ce que, pour former la surface cylindrique du rotor, chaque aimant polaire (1), en section transversale du rotor, représente une partie de cercle, limitée par un arc ( $\alpha$ ) dont la longueur (1) est égale au pas polaire ( $\tau$ ) du rotor, ainsi que par des tronçons de cordes partant des extrémités de l'arc ( $\alpha$ ) et s'appuyant sur l'arc $\left( \frac{\pi}{2} \quad \frac{\pi}{2n} \right)$ , tandis que chaque aimant interpolaire (2) a la forme d'un triangle isocèle dont les côtés latéraux coïncident avec les tronçons des cordes délimitant les aimants polaires (1) adjacents, et dont le sommet se trouve en un point situé entre les extrémités des arcs de ces aimants polaires (1).

*FIG.1*

EP 0 383 916 A1

FIG.2

FIG.3

FIG.4

FIG.5

# INTERNATIONAL SEARCH REPORT

International Application No PCT/SU 88/00159

**I. CLASSIFICATION OF SUBJECT MATTER** (if several classification symbols apply, indicate all) *

According to International Patent Classification (IPC) or to both National Classification and IPC

$IPC^4$ - H 02 K 1/24, 21/08

**II. FIELDS SEARCHED**

| Minimum Documentation Searched [7] | |
|---|---|
| Classification System | Classification Symbols |
| $IPC^4$ | H 02 K 1/06, 1/08, 1/22, 1/24, 21/06, 21/08, 21/12, 21/24 |

| Documentation Searched other than Minimum Documentation<br>to the Extent that such Documents are Included in the Fields Searched [8] |
|---|
| |

**III. DOCUMENTS CONSIDERED TO BE RELEVANT [9]**

| Category * | Citation of Document, [11] with indication, where appropriate, of the relevant passages [12] | Relevant to Claim No. [13] |
|---|---|---|
| A | US,A,4358696 (SIEMENS-ALLIS,INC) 09 November 1982, (09.11.82), see the abstract, figure 1 | 1-5 |
| A | US,A,4127786 (SIEMENS AKTIENGESELLSCHAFT) 28 November 1978 (28.11.78), see column 2, lines 10-54, figures 1,4,5 | 1-5 |
| A | V.A.Balagurov et al. "Elektricheskie generatory s postoyannymi magnitami",1988, Energoatomizdat, (Moscow),see pages 28,29, figures 1,25, 1,26 | 1-5 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 21 April 1989 (24.04.89) | 05 May 1989 (05.05.89) |
| International Searching Authority | Signature of Authorized Officer |
| ISA/SU | |

Form PCT/ISA/210 (second sheet) (January 1985)